# EUROPEAN PATENT APPLICATION

(11) **EP 4 350 048 A2**
(43) Date of publication of application: **10.04.2024**
(21) Application number: 23196255.6
(22) Date of filing: 08.09.2023
(51) Int. Cl.: C25B 1/04, C25B 11/052, C25B 11/056, C25B 11/063, C25B 15/08

(54) **SUPPORT, ELECTRODE, MEMBRANE ELECTRODE ASSEMBLY, ELECTROCHEMICAL CELL, STACK, AND ELECTROLYZER**

(30) Priority: 03.10.2022 JP 2022159825
(71) Applicant: KABUSHIKI KAISHA TOSHIBA, Minato-ku Tokyo 105-0023 (JP); Toshiba Energy Systems & Solutions Corporation, Saiwai-ku Kawasaki-shi Kanagawa 2120013 (JP)
(72) Inventor: YAMAGIWA, Masakazu, Tokyo (JP); YOSHINAGA, Norihiro, Tokyo (JP); SUGANO, Yoshitsune, Tokyo (JP)
(74) Representative: Marks & Clerk LLP

(57) **Abstract**

A support according to an embodiment includes fibers. A first arithmetic mean roughness of the fibers observed from in-plane direction of the support is 7 [um] or more and 40 [µm] or less. A first sampling length of the first arithmetic mean roughness is one fifth of an average diameter of the fibers observed from the in-plane direction of the support.

## Description

### FIELD

The present embodiments relate to a support, an electrode, a membrane electrode assembly, an electrochemical cell, a stack, and an electrolyzer.

### BACKGROUND

In recent years, electrochemical cells have been actively studied. Among electrochemical cells, for example, a polymer electrolyte membrane electrolysis cell (PEMEC) is expected to be used for hydrogen generation in a large-scale energy storage system. In order to ensure sufficient durability and electrolytic properties, platinum (Pt) nanoparticle catalysts are generally used for PEMEC cathodes, and noble metal catalysts such as iridium (Ir) nanoparticle catalysts are used for positive electrodes. Additionally, a method for obtaining hydrogen from ammonia is also considered. In addition, a method for obtaining organic material or carbon monoxide by electrolysis of carbon dioxide is also considered.

### BRIEF DESCRIPTION OF THE DRAWINGS

FIG. 1 is a schematic diagram of a support according to an embodiment.
FIG. 2 is a scanning electron microscope (SEM) image of support according to an embodiment.
FIG. 3 is a formula of arithmetic mean roughness.
FIG. 4 shows analysis spots of a support according to an embodiment.
FIG. 5 shows analysis spots of a support according to an embodiment.
FIG. 6 is a schematic diagram of an electrode according to an embodiment.
FIG. 7 is a schematic diagram of a membrane electrode assembly according to an embodiment.
FIG. 8 is a schematic diagram of an electrochemical cell according to an embodiment.
FIG. 9 is a schematic diagram of a stack according to an embodiment.
FIG. 10 is a conceptual diagram of an electrolyzer according to an embodiment.

### DETAILED DESCRIPTION

A support according to an embodiment includes fibers. A first arithmetic mean roughness of the fibers observed from in-plane direction of the support is 7 [um] or more and 40 [µm] or less. A first sampling length of the first arithmetic mean roughness is one fifth of an average diameter of the fibers observed from the in-plane direction of the support.

Hereinafter, the embodiments will be described with reference to the drawings.

It is to be noted that the same reference numerals are given to common components throughout the embodiments, and redundant explanations are omitted.

In the specification, values at 25 [°C] and 1 atm (atmosphere) are shown. Each thickness of the members represents an average of distance in a stacking direction.

### (FIRST EMBODIMENT)

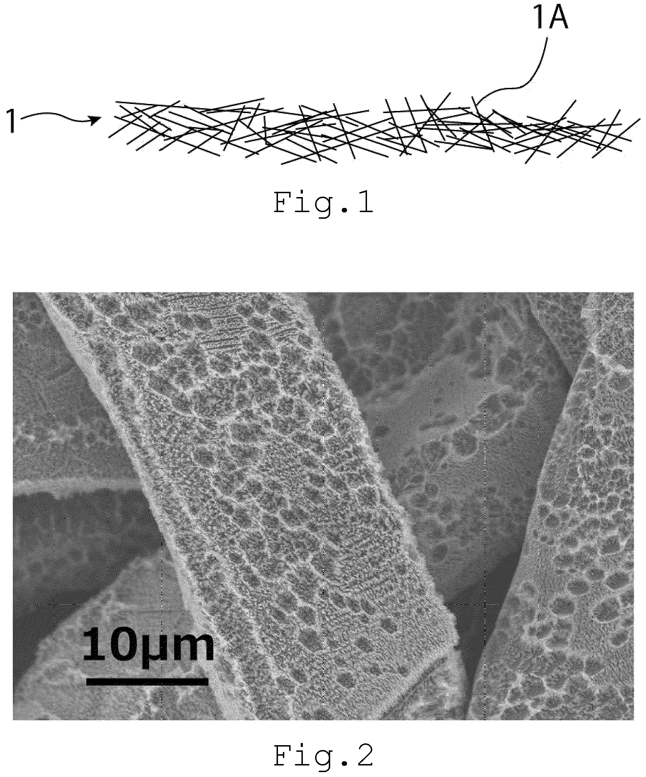

A first embodiment relates to a support. FIG. 1 shows a schematic diagram of a support 1. The support 1 shown in FIG. 1 includes fibers 1A. The fibers 1A are crossed regularly or irregularly. The support 1 is a porous member through which gas and/or fluid pass.

It is preferable that the fibers 1A are metal fibers of one or more elements of valve metals. The fibers 1A includes one or more metal elements selected from the group consisting of titanium (Ti), aluminum (Al), tantalum (Ta), niobium (Nb), hafnium (Hf), zirconium (Zr), zinc (Zn), tungsten (W), bismuth (Bi), and antimony (Sb). It is preferable that the fiber 1A includes titanium as a main component. It is preferable that 90 [wt%] or more and 100 [wt%] or less of the fibers 1A is titanium.

It is preferable that a diameter of the fibers 1A is 1 [um] or more and 500 [µm] or less. In view of reactivity and electrical conductivity, it is preferable that a diameter of the fibers 1A is 1 [um] or more and 100 [µm] or less.

There is microscopic unevenness on a surface of the fibers 1A. By virtue of the microscopic unevenness, a catalyst layer provided on the support 1 is not easy to cleave. An electrode using the support 1 has improved durability.

A SEM image of the surface of the support 1 is shown in FIG. 2. There are small unevenness and relatively large unevenness on the surface of the support 1.

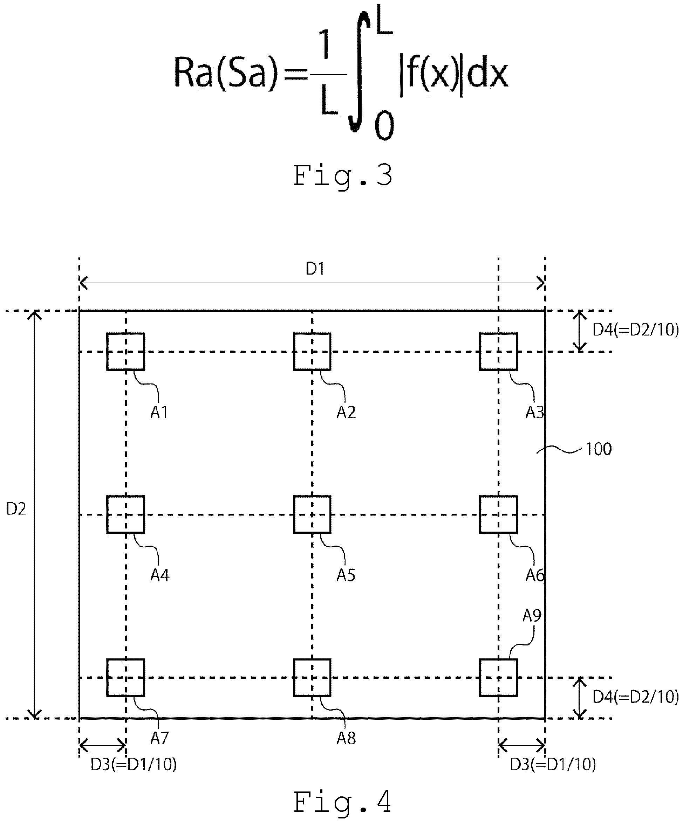

The unevenness on the surface of the support 1 is defined by arithmetic mean roughness (ISO 25178 or JIS B 0601:2013). A formula of the arithmetic mean roughness (Ra or Sa) is shown in FIG. 3. "f(x)" in the formula of FIG. 3 represents a function of a roughness profile. The arithmetic mean roughness is a value [um] calculated by the formula shown in FIG. 3, where a sampling length L is taken from the roughness profile in a mean line direction, x-axis is the mean line direction, y-axis is longitudinal magnification, and the roughness profile is represented as y = f(x). The sampling length L is determined with reference to the diameters of the fibers 1A. The diameter of the fibers 1A is measured by observing a surface or the support 1. FIG. 4 shows analysis spots of the support 1. The diameter of the fibers 1A is obtained by observing 9 spots (A1 to A9) on the surface of the support 1 of a SEM image.

Each spot has a square region of 1 mm² or more. When a length of the support 1 is denoted by D1 and a width of the support 1 is denoted by D2 (D1 ≥ D2) as shown in FIG. 4, each of the analysis spots A1 to A9 is an area centered on each of the nine intersections of virtual lines, where two of the virtual lines are drawn from both edges facing to the width direction of the support 1 to the respective interior at distance D3 (D3 = D1/10), two of the virtual lines are drawn from both edges facing to the length direction of the support 1 to the respective interior at distance D4 (D4 = D2/10), one of the virtual lines is drawn parallel to the width direction at center of the support 1, and one of the virtual lines is drawn parallel to the length direction at center of the support 1. The observed cross-section of SEM is in-plane direction of FIG. 4. The SEM image is a 10,000 times magnified image.

One fiber having a largest diameter is selected from each of the nine spots A1 to A9 of the SEM image, and a diameter of each of the selected fiber is measured at center in a length direction of the each of the selected fiber 1A within the SEM image. An average value of nine measured diameter of the selected fibers is a base value for calculation of the sampling length L.

One fiber having a largest diameter is selected from each of the nine spots A1 to A9 of the SEM image, and a secondary electron image is obtained by scanning each of the selected fiber in the length direction of each of the selected fibers including center in a length direction of the each of the selected fiber 1A within the SEM image to measure a surface roughness.

When a sampling length of the arithmetic mean roughness is one fifth of the diameter of the fibers 1A observed from the in-plane direction of the support 1, the arithmetic mean roughness of the fibers 1A observed from the in-plane direction of the support 1 is preferably 7 [µm] or more and 40 [um] or less and more preferably 15 [µm] or more and 30 [µm] or less. When the fibers 1A includes unevenness on the surface which satisfies the range of the arithmetic mean roughness, dense unevenness presents on the surface of the fibers 1A. A catalyst layer which is affected by the dense shape is grown from the dense unevenness in columnar shape or the like. By virtue of the unevenness, the unevenness of the catalyst layer increases, and the durability is improved because materials are easy to move to inside of the catalyst layer. If the sampling length of the arithmetic mean roughness is one fifth of the diameter of the fibers 1A and the arithmetic mean roughness is less than 7 [µm], unevenness density is low, a catalyst layer is not grown in columnar shape or the like because the thicker catalyst layer is grown, the more the unevenness of the catalyst layer is flattened. Therefore, the durability is not improved because materials are not easy to move to inside of the catalyst layer. If the sampling length of the arithmetic mean roughness is one fifth of the diameter of the fibers 1A and the arithmetic mean roughness is more than 40 [µm], a catalyst layer is not grown in columnar shape or the like because the unevenness where the catalyst is grown is too close and the unevenness does not affect for growing the catalyst. Therefore, the catalyst layer is grown in layers. Accordingly, the durability is not improved because materials are not easy to move to inside of the catalyst layer.

A first arithmetic mean roughness is an arithmetic mean roughness obtained by observing the support 1 from the in-plane direction of the support 1 where the sampling length L in the formula shown in FIG. 3 is a first sampling length, and the first sampling length is one fifth of an average value (first average diameter) of the diameters of the fibers 1A observed from the in-plane direction of the support 1.

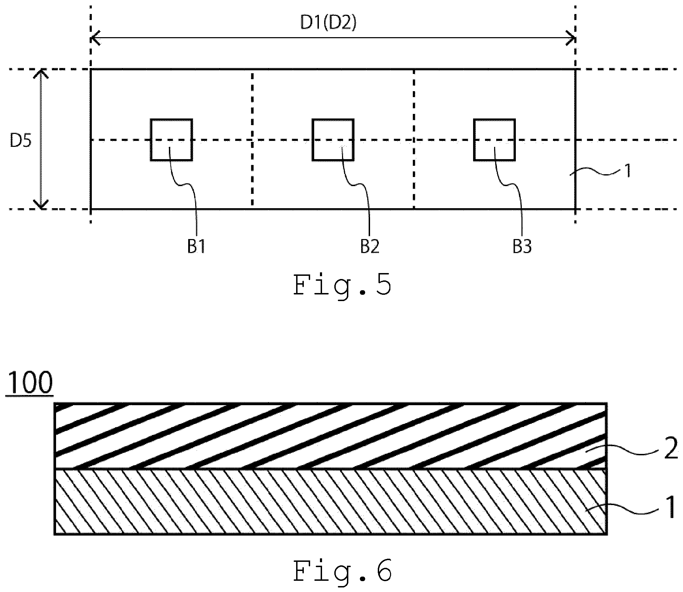

Additionally, unevenness also exists on the fibers 1A by observing the support 1 from lateral directions. FIG. 5 shows analysis spots for observing the support 1 from the lateral directions. The support 1 have four side surfaces. Each of the side surfaces is observed in three spots, for a total of 12 spots. When a thickness of the support 1 is denoted by D5 as shown in FIG. 5, each of the analysis spots B1 to B3 is a square area centered on each of three equal sections of a virtual line, where a virtual line is drawn at half the thickness D5 and the virtual line is divided into three equal length in the width direction or the length direction of the support 1 to form the three equal sections. Each spot has a square region of 1 mm². Each of the spots is observed under 10,000 times by SEM.

When the arithmetic mean roughness is obtained by observing the support 1 from the lateral directions, the sampling length L is determined with reference to the diameters of the fibers 1A. The diameters obtained by observing from the lateral directions used for the diameters of the fibers 1A. One fiber having a largest diameter is selected from each of the three spots of the SEM image in each side surface, and a secondary electron image is obtained by scanning each of the selected fiber in the length direction of each of the selected fibers including center in a length direction of the each of the selected fiber 1A within the SEM image to measure a surface roughness.

When a sampling length of the arithmetic mean roughness is one fifth of the diameter of the fibers 1A observed from the lateral directions of the support 1, the arithmetic mean roughness of the fibers 1A observed from the lateral directions of the support 1 is preferably 10 [um] or more and 30 [um] or less and more preferably 10 [um] or more and 20 [µm] or less. When the fibers 1A includes unevenness on the surface which satisfies the range of the arithmetic mean roughness, dense unevenness exists on the surface of the fibers 1A. A catalyst layer which is affected by the dense shape is grown from the dense unevenness in columnar shape or the like. By virtue of the unevenness, the unevenness of the catalyst layer increases, and the durability is improved because materials are easy to move to inside of the catalyst layer. If the sampling length of the arithmetic mean roughness is one fifth of the diameter of the fibers 1A and the arithmetic mean roughness is less than 10 [µm], unevenness density is low, a catalyst layer is not grown in columnar shape or the like because the thicker catalyst layer is grown, the more the unevenness of the catalyst layer is flattened. Therefore, the durability is not improved because materials are not easy to move to inside of the catalyst layer. If the sampling length of the arithmetic mean roughness is one fifth of the diameter of the fibers 1A and the arithmetic mean roughness is more than 30 [µm], a catalyst layer is not grown in columnar shape or the like because the unevenness where the catalyst is grown is too close and the unevenness does not affect for growing the catalyst. Therefore, the catalyst layer is grown in layers. Accordingly, the durability is not improved because materials are not easy to move to inside of the catalyst layer.

A second arithmetic mean roughness is an arithmetic mean roughness obtained by observing the support 1 from the lateral directions of the support 1 where the sampling length L in the formula shown in FIG. 3 is a second sampling length, and the second sampling length is one fifth of an average value (second average diameter) of the diameters of the fibers 1A observed from the lateral directions of the support 1.

When a sampling length of the arithmetic mean roughness is one half of the diameter of the fibers 1A observed from the lateral directions of the support 1, the arithmetic mean roughness of the fibers 1A observed from the lateral directions of the support 1 is preferably 5 [µm] or more and 10 [µm] or less and more preferably 5 [µm] or more and 8 [µm] or less. When the fibers 1A includes unevenness on the surface which satisfies the range of the arithmetic mean roughness, difference in levels exists on the surface of the fibers 1A and a catalyst layer grown in layers with cracks is included. Therefore, the durability is improved because materials are easy to move to inside of the catalyst layer. If the sampling length of the arithmetic mean roughness is one half of the diameter of the fibers 1A and the arithmetic mean roughness is less than 5 [µm], difference in levels does not exist on the surface of the fibers 1A and a catalyst layer grown in layers with cracks is not included. Therefore, the durability is not improved because materials are not easy to move to inside of the catalyst layer. If the sampling length of the arithmetic mean roughness is one half of the diameter of the fibers 1A and the arithmetic mean roughness is more than 10 [µm], difference in levels does not exist on the surface of the fibers 1A and a catalyst layer grown in layers with cracks is not included. Therefore, the durability is not improved because materials are not easy to move to inside of the catalyst layer.

A third arithmetic mean roughness is an arithmetic mean roughness obtained by observing the support 1 from the lateral directions of the support 1 where the sampling length L in the formula shown in FIG. 3 is a third sampling length, and the third sampling length is one half of an average value (second average diameter) of the diameters of the fibers 1A observed from the lateral directions of the support 1.

The unevenness which satisfies the above arithmetic mean roughness is formed by treating the fibers 1A of the support 1 with hydrofluoric acid. For example, the arithmetic mean roughness (the sampling length L is one fifth of the diameter of the fibers 1A) of the non-treated which is obtained by observing from the in-plane direction or from the lateral directions is 1 [um] or more and 5 [µm] or less. If the fibers 1A is smooth like this, the catalyst layer which is provided on the support 1 is easily cleaved. If the support 1 is treated with oxalic acid, the arithmetic mean roughness (the sampling length L is one fifth of the diameter of the fibers 1A) which is obtained by observing from the in-plane direction or from the lateral directions is 1 [um] or more and 8 [µm] or less. If the fibers 1A is not treated or treated with oxalic acid other than hydrofluoric acid, the difference in levels which is starting point of the cracks does not formed, or the columnar shape or the like which reflects the unevenness is not formed on the surface of the catalyst layer. Therefore, the durability is not improved because materials are not easy to move to inside of the catalyst layer.

The support 1 can be treated, for example, by immersing in a solution containing hydrofluoric acid. For example, a plurality of the support 1 is immersed in the solution containing hydrofluoric acid, and the immersed member is washed with water to obtain the support 1 that the microscopic unevenness is formed in the surface of the fibers. The support 1 can be sprayed with the solution containing hydrofluoric acid. In view of economy, the support 1 is immersed in the solution preferably.

### (SECOND EMBODIMENT)

A second embodiment relates to an electrode. A cross-sectional schematic diagram of an electrode 100 according to the embodiment is shown in FIG. 6. The electrode 100 includes the support 1 and a catalyst layer 2. The catalyst layer 2 is used as a catalyst in electrode reactions for water electrolysis in the embodiments. The catalyst layer 2 is also used as a catalyst for synthesizing ammonia.

The electrode 100 according to the second embodiment is used as an anode for water electrolysis. When the catalyst layer 2 further includes a catalyst for a fuel cell, the electrode 100 can be also used as an oxygen electrode of a fuel cell. The electrode 100 according to embodiments can be used as an anode for producing ammonia by electrolysis. The electrode 100 according to embodiments can be used as an anode of an electrolyzer for synthesizing ammonia. Hereinafter, an example of water electrolysis is described in the second embodiment and the other embodiments. The electrode 100 according to embodiments can be also used for other than water electrolysis, for example, as an anode of a membrane electrode assembly for electrolysis of synthesizing ammonia so that ultrapure water is supplied to an anode, proton and oxygen is produced in the anode by decomposing water, the produced proton passes through an electrolyte membrane, and ammonia is synthesized by binging nitrogen provided to a cathode, protons, and electrons. The electrode 100 according to embodiments can be also used as a cathode for producing hydrogen by electrolyzing ammonia. The electrode 100 according to embodiments can be used as a cathode for a hydrogen generation apparatus. Hereinafter, an example of water electrolysis is described in the second embodiment and the other embodiments. The electrode 100 according to embodiments can be also used for other than water electrolysis, for example, as a cathode of a membrane electrode assembly for electrolysis of decomposing ammonia so that ammonia is supplied to a cathode, proton and nitrogen is produced in the cathode by decomposing ammonia, the produced proton passes through an electrolyte membrane, and hydrogen is synthesized by binging protons and electrons. The electrode 100 can be also used for an anode of an electrolyzer which electrolyze carbon dioxide to generate organic compounds such as methanol and ethylene and carbon monoxide.

The support 1 according to the first embodiment is preferably used for the support 1 of the electrode 100.

The catalyst layer 2 includes an oxide of noble metal including Ir and as a main component and an oxide of non-noble metal. An intermediate layer which is not shown in figures may be provided between the support 1 and the catalyst layer 2. The catalyst layer 2 includes a supported catalyst that catalyst particles are supported on carbon particles or a carrier-less catalyst. The durability of the electrode 100 is improved whether the supported catalyst or the carrier-less catalyst is used. When the carrier-less catalyst is used, the durability of the electrode 100 is improved because of anchor effects that the catalyst is provided in the evenness on the surface of the fibers 1A of the support 1.

The sum of the amount of the noble metal per area of the catalyst layer 2 is preferably 0.02 [mg/cm²] or more and 1.0 [mg/cm²] or less and more preferably 0.05 [mg/cm²] or more and 0.5 [mg/cm²] or less. The sum of the amount of them can be analyzed by ICP-MS (Inductively Coupled Plasma Mass Spectrometry).

A porosity rate of the catalyst layer 2 is preferably 10 [%] or more and 90 [%] or less and more preferably 30 [%] or more and 70 [%] or less .

When the catalyst layer 2 is the carrier less, the catalyst layer 2 has a structure that a sheet layer and a gap layer are stacked alternately. The sheet layer and the gap layer are stacked in approximately parallel. Most of the gap layer is cavities, and a protruding part of the sheet layer in the gap layer connects the sheet layers. The sheet layers are connected with pillars existing in the gap layer.

The sheet layer is a layer of aggregated catalyst particles in sheet shape. There are cavities also in the sheet layer. The gap layer is a region existing between the sheet layers and does not have a structure of catalyst particles aligned in regularly.

An average thickness of the sheet layer is preferably 4 [nm] or more and 50 [nm] or less. An average thickness of the gap layer is preferably 4 [nm] or more and 50 [nm] or less. It is preferable that the average thickness of the sheet layer is thicker than the average thickness of the gap layer. Part of the gap layer may be thicker than part of the sheet layer.

The catalyst layer 2 preferably includes the Ir oxide or/and the complex oxide of Ir and Ru, and optionally includes the Ru oxide as a noble metal oxide. The sum of the concentration of Ir and Ru contained in the catalyst layer 2 to one or more noble metal elements contained in the catalyst layer 2 is preferably 90 [wt%] or more and 100 [%] or less.

The catalyst layer 2 preferably includes one or more oxides including one or more non-noble metal elements selected the group consisting of Ni, Co, and Mn as a non-noble metal oxide. The non-noble metal element included in the catalyst layer 2 preferably includes Ni and optionally includes Co or/and Mn. The sum of the concentration of Ni, Co, and Mn contained in the catalyst layer 2 to one or more non-noble metal elements contained in the catalyst layer 2 is preferably 90 [wt%] or more and 100 [%] or less.

### (THIRD EMBODIMENT)

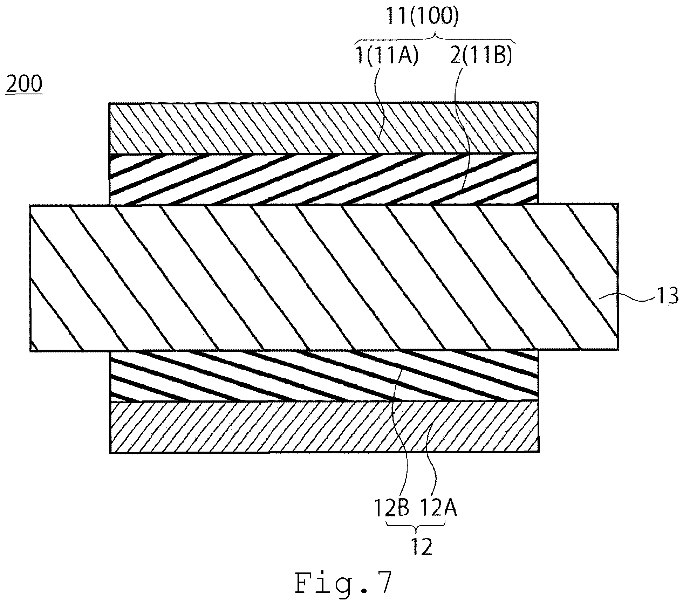

A third embodiment relates to a membrane electrode assembly (MEA). A schematic diagram of a membrane electrode assembly 200 according to the embodiment is shown in FIG. 7. The membrane electrode assembly 200 includes a first electrode 11, a second electrode 12, and an electrolyte membrane 13. The first electrode 11 is an anode electrode preferably. The second electrode is a cathode electrode preferably. The electrode 100 is preferably used for the first electrode 11. The membrane electrode assembly 200 of embodiments is preferably used for an electrochemical cell or a stack generating hydrogen or oxygen.

The electrode 100 including the support 1 according to the first embodiment and the catalyst layer 2 is preferably used for the first electrode. The catalyst layer 2 of the electrode 100 used for the first electrode is provided on the electrolyte membrane 13 side. The catalyst layer 2 is preferably in direct contact with the electrolyte membrane 13. The electrolyte membrane 13 may bite into cracks and/or holes of the catalyst layer 2.

A porous ratio of the first catalyst layer 11B is preferably 10 [%] or more and 90[%] or less and more preferably 30 [%] or more and 70 [%] or less. When the amount of metal per area of the first catalyst layer 11B is within the above range and has high porosity and hydrogen which is generated at the cathode (second electrode 12B) passes through the electrolyte membrane 13 and leaks into the anode (the first electrode 11), hydrogen is easily to pass through the first catalyst layer 11B and the first substrate 11A since the first catalyst layer 11B has low density. When leakage measures according to the embodiment are taken, hydrogen leakage can be effectively suppressed even if the first catalyst layer 11B which is easily to leak hydrogen due to the high porous is used. When a catalyst layer which is not easily to leak hydrogen is used for the first catalyst layer 11B, the membrane electrode assembly 200 according to the embodiment can effectively suppress hydrogen leakage.

The second electrode 12 includes a second support 12A and a second catalyst layer 12B. The second catalyst layer 12B is provided on the second support 12A. The second catalyst layer 12B is provided on the electrolyte membrane 13 side. The second catalyst layer 12B is preferably in direct contact with the electrolyte membrane 13.

A porous member having high conductivity is preferable for the second support 12A. The second support 12A is a porous member through which gas and/or fluid pass. The second support 12A is, for example, a carbon paper or a metal mesh. A porous support of blub metal is preferable for the metal mesh. A porous support containing one or more metals selected from the group consisting of titanium (Ti), aluminum (Al), tantalum (Ta), niobium (Nb), hafnium (Hf), zirconium (Zr), zinc (Zn), tungsten (W), bismuth (Bi), and antimony (Sb) or a porous support consisting of one kind of metals selected from consisting of titanium (Ti), aluminum (Al), tantalum (Ta), niobium (Nb), hafnium (Hf), zirconium (Zr), zinc (Zn), tungsten (W), bismuth (Bi), and antimony (Sb) is preferable for the porous support of the valve metal. The second support 12A may include a carbon layer (MPL layer) including carbon fine particles and a water-repellent resin (fluororesin such as PTFE and nafion) . The carbon layer is provided between, for example, the carbon paper and the second catalyst layer 12B.

The second catalyst layer 12B includes catalyst metal. It is preferable that the second catalyst layer 12B is particles of catalyst metal which is not supported on a carrier. The second catalyst layer 12B is preferably a porous catalyst layer. The catalyst metal of the second catalyst layer 12B is not limited to, for example, one or more metal elements selected from the group consisting of Pt, Rh, OS, Ir, Pd, and Au. The second catalyst layer 12B preferably includes one or more metal elements selected from the catalyst materials. It is preferable that the catalyst metal is metal, alloy, or metal oxide. It is preferable that the second catalyst layer 12B includes catalyst units of a sheet catalyst layer and a gap layer stacked alternately.

The sum of the amount of metal per area of the second catalyst layer 12B is preferably 0.02 [mg/cm²] or more and 1.0 [mg/cm²] or less and more preferably 0.05 [mg/cm²] or more and 0.5 [mg/cm²] or less. The sum of the amount of them can be analyzed by ICP-MS (Inductively Coupled Plasma Mass Spectrometry).

A porosity rate of the second catalyst layer 12B is preferably 10 [%] or more and 90 [%] or less and more preferably 30 [%] or more and 70 [%] or less.

The electrolyte membrane 13 has proton conductivity. As the electrolyte membrane 13, fluorinated polymer having one or more organic groups selected from the group consisting of a sulfonic acid group, a sulfonimide group, and a sulfate group or an aromatic hydrocarbon based polymer is preferable. As the electrolyte membrane 13, the fluorinated polymer having a sulfonic acid group is preferable. NAFION (trademark, DuPont), FLEMION (trademark, Asahi Glass Co., Ltd.), SELEMION (trademark, Asahi Glass Co., Ltd.), Aquivion (trademark, Solvay Specialty Polymers) or Aciplex (trademark, Asahi Kasei Corp.) or the like can be used as the fluorinated polymer having the sulfonic acid group.

A thickness of the electrolyte membrane 13 is chosen appropriately in consideration of a membrane permeability, durability and the like. In view of the strength, anti-solubility, and output characteristics of MEA, the thickness of the electrolyte membrane 13 is preferably 20 [µm] or more and 500 [µm] or less, more preferably 50 [um] or more and 300 [µm] or less, and still more preferably 80 [µm] or more and 200 [µm] or less.

The electrolyte membrane 13 preferably includes a noble metal region on the first electrode 11 side. The noble metal region includes noble metal particles. The noble metal region is preferably present on the surface of the electrolyte membrane 13. The noble metal region preferably consists of one region. The noble metal region may include divided regions.

The noble metal particles are particles including one or more kinds of noble metal elements selected from the group consisting of Pt, Re, Rh, Ir, Pd, and Ru. The noble metal particles may include or optionally include alloy particles containing one or more kinds of noble metal elements selected from the group consisting of Pt, Re, Rh, Ir, Pd, and Ru. It is preferable that the noble metal particles are particles of one kind of noble metal element selected from the group consisting of Pt, Re, Rh, Ir, Pd, and Ru. It is preferable that the noble metal particles are particles of Pt. It is preferable that the noble metal particles are particles of Re. It is preferable that the noble metal particles are particles of Rh. It is preferable that the noble metal particles are particles of Ir. It is preferable that the noble metal particles are particles of Pd. It is preferable that the noble metal particles are particles of Ru.

The noble metal particles oxidize hydrogen which is generated on the cathode side and passes through the electrolyte membrane 13. The noble metal particles reduce leakage of hydrogen. The extracted hydrogen from the cathode side is not easily oxidized because the noble metal particles is provided on the anode side. The region where the noble metal particles are included may be also provided on the second electrode 12 (cathode) side of the electrolyte membrane 13.

An average circumscribed circle diameter of the noble metal particles is preferably 0.5 [nm] or more and 50 [nm] or less, 1.0 [nm] or more and 10 [nm] or less, and still more preferably 1 [nm] or more and 5 [nm] or less.

A long-term operation with high activity becomes available by using the electrode 100 having high durability for the anode of the membrane electrode assembly 200.

### (FOURTH EMBODIMENT)

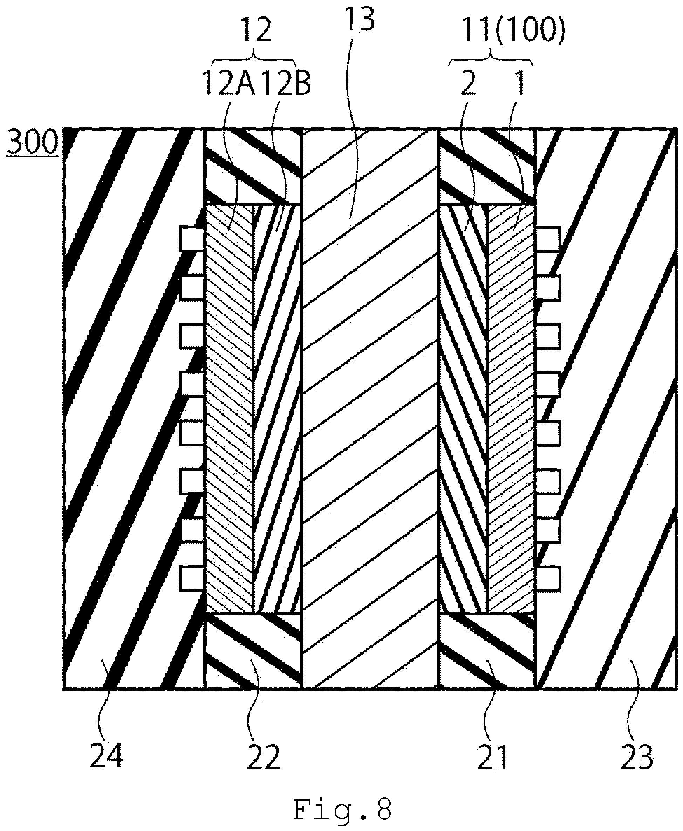

A fourth embodiment relates to electrochemical cell. A cross-sectional diagram of the electrochemical cell 300 according to the third embodiment is illustrated in FIG. 8. Hereinafter, the electrochemical cell will be described as an example of water electrolysis. Hydrogen is also generated by decomposition of ammonia other than water.

The electrochemical cell 300 according to the fourth embodiment as illustrated in FIG. 8 includes a first electrode (anode) 11, a second electrode (cathode) 12, an electrolyte membrane 13, a gasket 21, a gasket 22, a separator 23, and a separator 23. A seal member of the first electrode 11 can be used for the gasket 21. A seal member of the second electrode 12 can be used for the gasket 22.

The membrane electrode assembly 200 that the first electrode (anode) 11, the second electrode (cathode) 12, and the electrolyte membrane 13 are bonded is preferably used for the electrochemical cell 300. An anode feeder may be provided separately from the separator 23. A cathode feeder may be provided separately from the separator 24.

In the electrochemical cell 300, a power supply which is not shown in figures is connected to the separator 23 and the separator 24, and reactions occur in the anode 11 and the cathode 12. For, example, water is supplied to the anode 11 and water is decomposed to proton, oxygen, and electron at the anode 11. The support for the electrode and the feeder are porous members, and the porous members function as a passage board. The formed water and un-reacted water are extracted, and proton and electron are used for a cathode reaction. The cathode reaction is that proton and electron react, and hydrogen is formed. The formed hydrogen and/or formed oxygen can be used as a fuel-cell fuel or the other apparatus.

### (FIFTH EMBODIMENT)

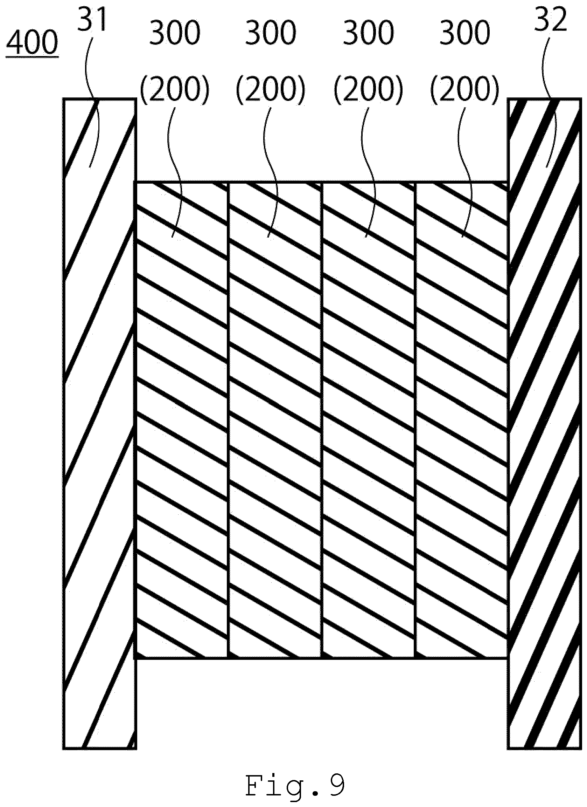

A fifth embodiment relates to a stack. FIG. 9 illustrate a schematic cross-sectional diagram of a stack. The stack 400 according to the fifth embodiment illustrated in FIG. 9 is configured so that two or more of the MEAs 200 or the electrochemical cells 300 are connected in series. Tightening plates 31 and 32 are attached to both ends of the electrochemical cells 300.

The amount of hydrogen generated in the electrochemical cell 300 composed of a single MEA 200 is small. Therefore, a large amount of hydrogen can be obtained by structuring the stack 400 in which two or more of the electrochemical cells are connected in series.

### (SIXTH EMBODIMENT)

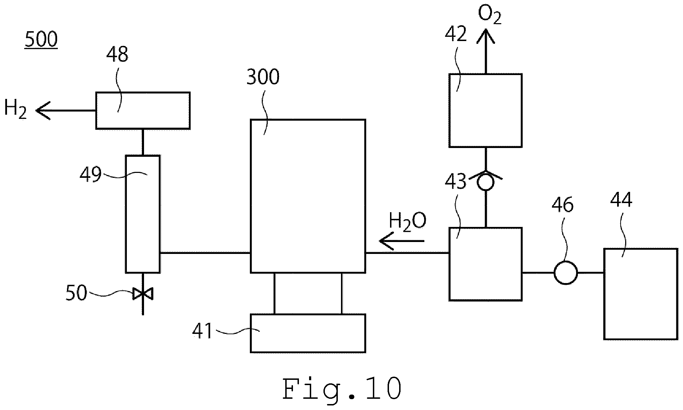

A sixth embodiment relates to an electrolyzer. FIG. 10 illustrates a conceptual diagram of the electrolyzer according to the sixth embodiment. The electrolyzer 500 uses the electrochemical cell 300 or the stack 400. The electrolyzer of FIG. 10 is used for water decomposition. The following is an explanation of an electrolyzer using a water electrolyzer as an example. For example, when hydrogen is generated from ammonia, an apparatus having the other structure using the electrode 100.

As shown in FIG. 10, water electrolysis cells stacked in series are used as the stack 400 for water electrolysis. A power supply 41 is attached to the stack 400, and voltage is applied between the anode and the cathode. A gas-liquid separator 42 for separating generated gas and unreacted water and a mixing tank 43 are connected to the anode side of the stack 400 for water electrolysis and water is sent to the mixing tank 43 by a pump 46 from an ion exchanged water producing apparatus 44 that supplies water for mixing in the mixing tank 43, and water is circulated to the anode mixed in the mixing tank 43 through a check valve 47 from the gas-liquid separator 42. Oxygen generated in the anode passes through the gas-liquid separator 42 so that an oxygen gas is obtained. On the other hand, a hydrogen purification device 49 is connected to the cathode side subsequent to a gas-liquid separator 48 to obtain high purity hydrogen. Impurities are discharged via a path having a valve 50 connected to the hydrogen purification device 49. In order to control the operating temperature stably, it is possible to control the heating of the stack and a mixing tank, the current density during thermal decomposition, and the like.

Some elements are expressed only by element symbols thereof.

Hereinafter, clauses of embodiments are additionally noted.

Clause 1. A support comprising: fibers, wherein
a first arithmetic mean roughness of the fibers observed from in-plane direction of the support is 7 [um] or more and 40 [µm] or less, and
a first sampling length of the first arithmetic mean roughness is one fifth of an average diameter of the fibers observed from the in-plane direction of the support.

Clause 2. The support according to clause 1, wherein first arithmetic mean roughness is 15 [um] or more and 30 [µm] or less.

Clause 3. The support according to clause 1 or 2, wherein
a second arithmetic mean roughness of the fibers observed from lateral directions of the support is 10 [um] or more and 30 [µm] or less, and
a second sampling length of the second arithmetic mean roughness is one fifth of an average diameter of the fibers observed from the lateral directions of the support.

Clause 4. The support according to clause 1 or 2, wherein
a third arithmetic mean roughness of the fibers observed from lateral directions of the support is 5 [um] or more and 10 [µm] or less, and
a third sampling length of the third arithmetic mean roughness is one half of an average diameter of the fibers observed from the lateral directions of the support.

Clause 5. The support according to any one of clauses 1 to 4, wherein the support includes fibers of valve metal.

Clause 6. The support according to any one of clauses 1 to 5, wherein the support includes fibers of titanium.

Clause 7. The support according to any one of clauses 1 to 6, a diameter of the fibers is 1 [um] or more and 500 [µm] or less.

Clause 8. An electrode includes the support according to any one of clauses 1 to 7 and a catalyst layer.

Clause 9. A membrane electrolyte assembly includes the electrode according to clause 8 and an electrolyte membrane.

Clause 10. An electrochemical cell includes the membrane electrolyte assembly according to clause 9.

Clause 11. A stack includes the membrane electrolyte assembly according to clause 9.

Clause 12. A stack included the electrochemical cell according to clause 10.

Clause 13. An electrolyzer includes the stack according to clause 11. Clause 14 An electrolyzer includes the stack according to clause 12.

While certain embodiments have been described, these embodiments have been presented by way of example only, and are not intended to limit the scope of the inventions. Indeed, the novel embodiments described herein, for example, PEMEC as a water electrolysis cell may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A support comprising: fibers, wherein
a first arithmetic mean roughness of the fibers observed from in-plane direction of the support is 7 [um] or more and 40 [µm] or less, and
a first sampling length of the first arithmetic mean roughness is one fifth of an average diameter of the fibers observed from the in-plane direction of the support.

2. The support according to claim 1, wherein first arithmetic mean roughness is 15 [um] or more and 30 [µm] or less.

3. The support according to claim 1 or 2, wherein
a second arithmetic mean roughness of the fibers observed from lateral directions of the support is 10 [um] or more and 30 [µm] or less, and
a second sampling length of the second arithmetic mean roughness is one fifth of an average diameter of the fibers observed from the lateral directions of the support.

4. The support according to any one of claims 1 to 3, wherein
a third arithmetic mean roughness of the fibers observed from lateral directions of the support is 5 [um] or more and 10 [µm] or less, and
a third sampling length of the third arithmetic mean roughness is one half of an average diameter of the fibers observed from the lateral directions of the support.

5. The support according to any one of claims 1 to 4, wherein the support includes fibers of valve metal.

6. The support according to any one of claims 1 to 5, wherein the support includes fibers of titanium.

7. The support according to any one of claims 1 to 6, a diameter of the fibers is 1 [um] or more and 500 [µm] or less.

8. An electrode comprising:
the support according to any one of claims 1 to 7; and
a catalyst layer.

9. A membrane electrolyte assembly comprising:
the electrode according to claim 8; and
an electrolyte membrane.

10. An electrochemical cell comprising:
the membrane electrolyte assembly according to claim 9.

11. A stack comprising:
the membrane electrolyte assembly according to claim 9.

12. A stack comprising:
the electrochemical cell according to claim 10.

13. An electrolyzer comprising:
the stack according to claim 11.

14. An electrolyzer comprising:
the stack according to claim 12.
